# EUROPÄISCHE PATENTANMELDUNG

(11) **EP 4 744 511 A1**
(43) Veröffentlichungstag der Anmeldung: **20.05.2026**
(21) Anmeldenummer: 24212591.2
(22) Anmeldetag: 13.11.2024
(51) Int. Cl.: A23N 7/04, B26D 3/26

(54) **SCHÄLVORRICHTUNG ZUM SCHÄLEN VON STANGENFÖRMIGEM GEMÜSE UND GREIFEREINHEIT**

(71) Anmelder: Hepro GmbH, 33378 Rheda-Wiedenbrück (DE)
(72) Erfinder: PROTTE, Christoph, 33129 Delbrück (DE)
(74) Vertreter: DTS Patent- und Rechtsanwälte PartmbB

(57) **Zusammenfassung**

Die vorliegende Erfindung betrifft eine Schälvorrichtung (100) zum Schälen von stangenförmigem Gemüse (102) mit einer Längsachse (A), insbesondere zum Schälen von grünem und/oder weißem Spargel, mit zumindest einem Greiferelement (106) zum Halten des Gemüses (102); einer Schäleinheit (108); und einer Steuereinheit (500) zum Steuern der Schälvorrichtung (100); wobei das Greiferelement (106) um zwei Achsen beweglich so gelagert ist, dass sich die Längsachse (A) eines gehaltenen stangenförmigen Gemüses (102) durch dessen Eigengewicht selbständig ausrichtet. Sie betrifft zudem eine Greifereinheit (106) für eine Schälvorrichtung (100) zum Schälen von stangenförmigem Gemüse (102) mit einer Längsachse (A), insbesondere zum Schälen von grünem und/oder weißem Spargel, mit zumindest einem Greiferelement (106) zum Halten des Gemüses (102); wobei das Greiferelement (106) um zwei Achsen beweglich gelagert ist.

## Beschreibung

Die vorliegende Erfindung betrifft eine Schälvorrichtung zum Schälen von stangenförmigem Gemüse mit einer Längsachse, insbesondere zum Schälen von grünem und/oder weißem Spargel. Sie betrifft zudem eine Greifereinheit für eine Schälvorrichtung.

Halb- oder vollautomatische Schälmaschinen für Stangengemüse, wie beispielsweise Spargel, sind im Stand der Technik bekannt. So offenbaren etwa die DE 92 03 558 U und die DE 11 2016 002 774 B4 Schälmaschinen für Spargel.

Eine besondere Herausforderung beim maschinellen Schälen von Spargel liegt in der Neigung der Spargelstangen zum Brechen. Gerade zu Beginn der Saison wächst der Spargel oft in Schüben und es bilden sich zwischen den Schüben brüchige Bereiche der Stangen.

Hinzu kommt, dass der Spargel oft kühl gelagert wird und gerade im Supermarkt auch im kalten Zustand geschält werden soll; er ist dann besonders brüchig. Zudem ist Importspargel wegen der Begasung beim Transport typischerweise besonders brüchig.

Beim Schälen in den bekannten Maschinen, in denen der "Kopf" der Spargelstange gehalten wird, ist die Längsachse der Spargelstangen oft nicht deckungsgleich mit der Vertikalachse des Halterung in der Maschine. Die Schälmesser und deren Arme können die Unregelmäßigkeiten der Spargelstangen nicht vollständig ausgleichen. Es kommt beim Schälen zu Spannungen in der Spargelstange und schließlich zum Bruch.

Es ist daher die Aufgabe der vorliegenden Erfindung, eine Schälvorrichtung zum Schälen von stangenförmigem Gemüse mit einer Längsachse, insbesondere zum Schälen von grünem und/oder weißem Spargel, bereitzustellen, die ein besonders schonendes Schälen ermöglicht.

Diese Aufgabe wird erfindungsgemäß gelöst durch eine Schälvorrichtung mit den Merkmalen des unabhängigen Anspruchs 1 sowie durch eine Greifereinheit mit den Merkmalen des unabhängigen Anspruchs 10. Vorteilhafte Ausgestaltungen und Weiterbildungen der Erfindung sind in den Unteransprüchen angegeben.

Die Schälvorrichtung zum Schälen von stangenförmigem Gemüse mit einer Längsachse, insbesondere zum Schälen von grünem und/oder weißem Spargel, umfasst zumindest ein Greiferelement zum Halten des Gemüses, eine Schäleinheit und eine Steuereinheit zum Steuern beziehungsweise Regeln der Schälvorrichtung. Dabei ist das Greiferelement um zumindest zwei Achsen, insbesondere um genau zwei Achsen, beweglich so gelagert, dass sich die Längsachse eines gehaltenen stangenförmigen Gemüses durch dessen Eigengewicht, das heißt durch das Gewicht des stangenförmigen Gemüses, insbesondere der Spargelstange im Schwerefeld der Erde, selbständig ausrichtet.

Insbesondere ist das Greiferelement über eine kardanische Lagerung mit einer Greifereinheit der Schälvorrichtung verbunden beziehungsweise daran befestigt.

Das Greiferelement ist insbesondere rotierbar oder schwenkbar beziehungsweise auslenkbar gelagert.

Eine grundlegende Idee besteht also darin, das Greiferelement rotierbar beziehungsweise schwenkbar oder auslenkbar so zu lagern, dass eine gyroskopische beziehungsweise kardanische Aufhängung beziehungsweise Lagerung erhalten wird. Unter einer gyroskopischen beziehungsweise kardanischen wird eine Lagerung oder Aufhängung verstanden, bei der sich das Greiferelement um zwei oder drei Achsen drehen kann, während die Aufhängung selbst fest bleibt. Insbesondere wird auf diese Weise ein Mittelpunkt des Greiferelements definiert, in dem sich die beiden Achsen schneiden und um den herum die Rotation oder Schwenkung erfolgen kann.

Das Stangengemüse richtet sich dank dieser Lagerung selbständig aus und es nimmt durch seine Masse eine Orientierung so ein, dass seine Längsachse im Wesentlichen genau senkrecht verläuft. Gleichzeitig kann die Stange um einen bestimmten Winkel ausgelenkt werden, ohne dass wesentliche Spannungen in der Stange induziert werden. Auf diese Weise können beispielsweise gebogene oder anderweitig unregelmäßig geformte Stangen leichter geschält werden, ohne dass Spannungen und Brüche auftreten.

Bei einer Ausbildung sind die zwei Achsen, um welche das Greiferelement beweglich gelagert ist, senkrecht zueinander angeordnet.

Insbesondere kann die Schälvorrichtung so eingerichtet sein, dass die zwei Achsen, um welche das Greiferelement beweglich gelagert ist, horizontal zur Erdoberfläche beziehungsweise senkrecht zum Schwerefeld der Erde angeordnet sind.

Bei einer weiteren Ausbildung ist das Greiferelement um die zwei Achsen um 5° bis 20° beweglich beziehungsweise auslenkbar gelagert, bevorzugt um 8° bis 17°, weiter bevorzugt um 10° bis 15°.

Bei einer Weiterbildung ist bei der um zwei Achsen beweglichen Lagerung zumindest ein Dämpfelement vorgesehen, das einer Bewegung beziehungsweise Auslenkung des stangenförmigen Gemüses um zumindest eine Achse entgegenwirkt, insbesondere durch Reibung. Insbesondere wird dadurch eine Bewegung um die Achse gebremst und beispielsweise Schwingungen werden gedämpft oder vermieden.

Das Dämpfungselement dient insbesondere als Rotationsbremse zum Dämpfen von Schwingungen, die etwa durch die nicht ganz gerade Form der Stangen entstehen, vor allem wenn am Ende einer Stange der Schälschritt beendet und das Schälmesser gelöst wird. Es kann ein Simmering/Wellendichtring verwendet werden, der die Schwingung durch eine gewisse Reibung dämpft. Als Material kommt beispielsweise NBR (Nitril-Butadien-Kautschuk), EPDM (Ethylen-Propylen-Dien-Kautschuk) oder FKM (Viton^{®}) infrage; das Dämpfungselement ist aber nicht auf ein bestimmtes Material beschränkt.

Bei einer Weiterbildung ist das Greiferelement ferner um eine dritte Achse, insbesondere senkrecht zu den genannten zwei Achsen der Lagerung des Greiferelements, rotierbar. Insbesondere kann es durch einen motorischen Antrieb rotierbar sein. Dabei kann insbesondere der motorische Antrieb dazu eingerichtet sein, die Rotation des Greiferelements um die dritte Achse über mindestens ein Übertragungselement und/oder eine Getriebeeinheit rotativ anzutreiben. Der Antrieb kann insbesondere schritt- oder winkelabhängig erfolgen.

Der motorische Antrieb - wie auch andere Antriebe und Motoren der Schälvorrichtung - kann als elektro-magnetischer Direktantrieb ausgebildet sein. Dadurch kann die Anzahl der bewegten oder drehenden Komponenten und Bauteile weiter verringert werden, wie beispielsweise Übertragungsriemen, sodass die Schälvorrichtung baulich kleiner ausgestaltet werden kann und sich zusätzlich besser reinigen lässt.

Insbesondere kann für die Schäleinheit ein elektro-magnetischer, linearer Direktantrieb vorgesehen sein, der regelmäßig keine Kraftübertragungen erfordert. Insbesondere kann eine oder können mehrere Linearführungen als elektromagnetische Antriebsbahnen ausgebildet sein; dabei kann eine verfahrbare Schäleinheit mit einem Antriebsabschnitt (Mover) vorgesehen sein, der beispielsweise einen ferromagnetischen Abschnitt aufweist.

Analog dazu kann auch der Antrieb für das eine oder die mehreren Greiferelemente mittels elektro-magnetischer Direktantriebe ausgebildet sein, bei denen regelmäßig keine Übertragungselemente erforderlich sind, weil beispielsweise Dreh- und Festlager des Greiferelementes einen kranzförmigen Direktantrieb bilden.

Das Übertragungselement kann beispielsweise ein endlos umlaufendes Transmissionsband, insbesondere ein Zahnriemen sein. Bei einer alternativen Ausführungsform kann die Kraftübertragung durch ein Getriebe erfolgen, über die das Greiferelement angetrieben wird. Hierdurch wird sowohl eine baulich kompakte und wirtschaftlich vorteilhafte Bauform erreicht.

Bei einer weiteren Ausführungsform kann die Schälvorrichtung eine Greifereinheit mit zwei oder mehr Greiferelementen aufweisen. Diese können durch den gleichen motorischen Antrieb rotierbar sein.

Bei einer Ausbildung umfasst die Schälvorrichtung ferner eine Sensoreinheit zum Erfassen zumindest eines Messwertes und die Steuereinheit ist dazu eingerichtet, auf Basis des Messwertes zumindest einen Schälparameter anzupassen. Dabei umfasst die Sensoreinheit beispielsweise einen Geometriesensor und/oder einen Farbsensor.

Ein Geometriesensor meint insbesondere eine Erfassungsvorrichtung, die dazu eingerichtet ist, zumindest eine geometrische Größe des stangeförmigen Gemüses zu erfassen, wie zum Beispiel den Durchmesser, den Durchmesserverlauf über die Länge einer Stange oder die Länge oder Teilabschnitte der Stange. Ein Geometriesensor kann auch als eine Geometriesensoreinheit im Zusammenwirken mit einem weiteren Sensor funktionieren, wie beispielsweise einem Wegsensor oder einem Inkrementalgeber eines Motors, die gemeinsam eine geometrische Größe des Gemüses erfassen können.

Vorliegend wird insbesondere davon ausgegangen, dass das stangenförmige Gemüse eine Längsachse A aufweist. Diese Längsachse A kann in diesem Kontext verwendet werden, um eine relative Lage und/oder Ausrichtung des Gemüses in der Schälvorrichtung und/oder bei dem Betrieb der Schälvorrichtung zu beschreiben. Es versteht sich, dass ein Naturprodukt, wie etwa eine Spargelstange, nicht eine Längsachse im mathematischen Sinne aufweist, sondern auch Krümmungen und Asymmetrien hat. Somit dient diese Bezeichnung insbesondere zum leichteren Verständnis und zur Veranschaulichung.

Bei der Schälvorrichtung verwendete Messer und/oder deren Lagerung sind insbesondere auf an sich bekannte Weise ausgebildet. Zum Beispiel können paarweise einander gegenüberliegende Messer vorgesehen sein. Diese können eine oder mehrere Klingen aufweisen. Weiterhin können die Messer gerade oder sichelförmig gewölbt ausgeführt sein, sodass die Sichelform beim Schälen der Kontur des Gemüses folgt.

Insbesondere können die Messer hinsichtlich der eigenen Längsachse, die parallel zur der mindestens einen Klinge verläuft, dreh- und/oder schwenkbar gelagert sein, sodass das Messer flach anliegend an der Stange geführt werden kann und Unebenheiten ausgeglichen werden können.

Der angepasste Schälparameter kann zum Beispiel einen der folgenden Parameter betreffen:
- Eine Anzahl der Schälschnitte in Umfangsrichtung, insbesondere der parallelen beziehungsweise einander gegenüberliegenden Schälschnitte;
- eine Schällänge mindestens eines Schälschnittes entlang der dritten Achse und/oder der Längsachse des stangenförmigen Gemüses;
- eine Anfangsposition und/oder Endposition mindestens eines Schälschnittes;
- eine Anpresskraft eines schwenkbar gelagerten Messers auf mindestens einer Teillänge der Schällänge;
- einen Haltebereich des Greiferelements entlang der Längsachse des Gemüses beim Halten des stangenförmigen Gemüses; und/oder
- eine Haltekraft des Greiferelements zumindest für eine Teildauer des Haltens des stangenförmigen Gemüses.

Dabei kann als ein "Schälschnitt" ein Abgleiten des Messers entlang des Gemüses in Anlage von einer Anfangsposition bis zu einer Endposition bezeichnen. Dabei kann die Endposition insbesondere das freie, nicht gehaltene Ende des stangenförmigen Gemüses sein. Beim Erreichen oder Überfahren der Endposition wird nach einem Schälschnitt das Messer abgehoben und/oder quer zur Längsachse weiter entfernt, um kontaktlos zur Anfangsposition verfahren werden zu können.

In analoger Weise meint die "Schällänge" insbesondere die Anlagestrecke des Messers an dem Gemüse während eines Schälschnitts.

Werden zwei oder mehr Stangen mit mechanisch gekoppelten Greiferelementen und/oder Messern behandelt, so können die Parameter gemittelte Werte sein oder sie können eine einzelne Stange betreffen.

Wenn zum Beispiel der Durchmesser von zwei Stangen ermittelt wird, so kann eine Anzahl der benötigten Schälschnitte ausgehend vom Durchmesser oder Umfang der dickeren Gemüsestange bestimmt werden, um insgesamt eine vollständige Schälung für beide Stangen zu gewährleisten.

Insbesondere können Schälparameter auch in Abhängigkeit von einer Betriebszeit und damit einer Summe aller bisherigen Schälschritte eingestellt werden. Somit kann es vorteilhaft sein, die Anpresskraft über die Dauer der Betriebszeit zu erhöhen, damit stets eine ausreichende Schnitt- oder Schältiefe erreicht wird.

Weiterhin kann vorgesehen sein, den Anpressdruck beziehungsweise den Schäldruck beispielsweise bei sehr dünnen Gemüsestangen zu verringern, um so die Schältiefe zu regeln. In analoger Weise kann es vorteilhaft sein den Anpressdruck zu verringern, wenn beispielsweise für den letzten Schälschritt nur noch ein kleiner Steg der restlichen Schale steht, sodass beim Schnitt nur eine kleinere Auflagefläche eines Messers anliegt, um insbesondere einen Teilschnitt durchzuführen. Bei einem Vollschnitt, wenn das Messer mit der gesamten Auflagebreite auf der Schale aufliegt, kann einen höhere Kraft vorgesehen werden.

Bei einer weiteren Ausbildung ist das zumindest eine Greiferelement als fluidisch öffnender und schließender Greifer ausgebildet, der insbesondere eine Ring- oder Kranzform aufweist. Beispielsweise umfasst das Greiferelement ein oder mehrere Greiferkissen. Zum Beispiel kann das Greiferelement hydraulisch oder pneumatisch öffnen beziehungsweise schließen. Dabei kann das stangenförmige Gemüse zum Ein- oder Ausführen in Richtung der Längsachse durch das Greiferelement hindurchgeführt werden, insbesondere vollständig hindurchgeführt werden.

Fluidisch meint hierbei, dass mittels eines Gases, insbesondere mittels Luft oder Druckluft, also pneumatisch, oder mittels einer Flüssigkeit, insbesondere Wasser, also hydraulisch, zumindest ein Greiferkissen des Greiferelements ausgedehnt wird, und durch eine so erhaltene Querschnittsverengung ein darin angeordnetes Gemüse im Umfang eingeklemmt und gehalten wird.

Dabei kann eine Ring- oder Kranzform auch aus einzelnen Greiferkissen gebildet werden, beispielsweise aus zwei, drei oder mehr einzelnen Greiferkissen, die beispielsweise nach innen gerichtet am Umfang einer Tragstruktur angeordnet ist. Der "Umfang" kann dabei aus einer Mehrzahl von kreissegment-, steg- oder fingerartigen Tragelementen gebildet sein, die insbesondere jeweils zumindest ein Greiferkissen aufweisen. Die Greiferkissen können gleichzeitig oder jeweils einzeln fluidisch beaufschlagt werden.

Mit "vollständig hindurchgeführt" ist vorliegend gemeint, dass ein stangenförmiges Gemüse ganz oder teilweise durch das Greiferelement geführt werden kann.

Die Schälvorrichtung kann ein Gehäuse aufweisen, dessen Maße beispielsweise 700 x 700 x 1400 mm (LxBxH) betragen können, insbesondere mit einem Anschluss zu einer 230 V Stromversorgung.

Bei einer weiteren Ausbildung der Schälvorrichtung kann oberhalb eines Schälraumes und/oder eines Antriebsraumes ein Transmissionsraum vorgesehen sein. In diesem ist eine Mehrzahl, idealerweise sind alle Übertragungselemente, Getriebe, Zahnriemenkränze/-scheiben und/oder sonstige bewegte Teile in dem Transmissionsraum aufgenommen. Insbesondere sind dabei die eigentlichen Motoren oder Motorgehäuse nicht im Transmissionsraum angeordnet.

Vorteilhafterweise ist eine Mehrzahl von Motoren und/oder Motorgehäusen der Schälvorrichtung in einem Antriebsraum angeordnet, insbesondere die Motoren, wobei deren Übertragungselemente, Getriebe, Zahnriemenkränze/-scheiben und/oder sonstige bewegte Teile im Transmissionsraum angeordnet sind.

Bei einer weiteren Ausführungsform kann vorgesehen sein, dass eine Zuführungsseite, von der her das stangenförmige Gemäße in der Greiferelement eingebracht wird, auch als eine Abführungs- oder Ausleitseite verwendet wird. In einem solchen Fall wird ein stangenförmiges Gemüse entlang einer Behandlungsachse in der ersten Richtung eingeführt, insbesondere nach unten abgesenkt, und es wird - insbesondere nach dem Schälvorgang - in entgegengesetzter Richtung wieder abgeführt, also beispielsweise nach oben herausgeführt. Bei einer weiteren Ausführung ist die Zuführseite unterschiedlich zur Abführungs- oder Ausleitseite.

Bei der Schälvorrichtung kann das Zuführen des Gemüses manuell oder mittels einer zumindest teilautomatisierten Transport- und/oder Transfereinheit erfolgen, die beispielsweise Halte- und/oder Greifvorrichtungen aufweist. Diese Transport- und/oder Transfereinheit kann beispielsweise einen Roboterarm, Pick-and-Place-Roboter und/oder Portalroboter umfassen.

Bei einer Ausführungsform kann in einem Bereich des Schälraumes mindestens eine seitliche Ausleitöffnung vorgesehen sein, durch welche das geschälte Gemüse insbesondere quer zu einer Behandlungsachse AA, abtransportiert und/oder entnommen werden kann. Dabei kann ein schwenkbares Auffang- und/oder Ausleitförderelement vorgesehen sein, das nach der Schälung einschwenkbar und/oder aktivierbar ist und das insbesondere bei der Schälung aus einem Bereich der geschnitten und herabfallenden Schalen an das geschälte Gemüse heranführbar ist.

Bei einer weiteren Ausführungsform kann in einem Schälraum zumindest ein zweiter, schenkbarer Greifer angeordnet sein, mittels welchem das Gemüse nach der Schälung ergriffen und gesteuert auf einem Auffang- und/oder Ausleitförderelement abgelegt oder aus dem Schälraum herausgeführt werden kann.

Über einen mit Frischwasser gefüllter Tank kann der Betrieb der Schälvorrichtung ohne sonstige Medienanschlüsse ortsunabhängig erfolgen (Plug-and-Play).

Bei einer weiteren Ausbildung ist Steuereinheit dazu ausgebildet, die Schälvorrichtung so anzusteuern, dass ein Haltezustand des Greiferelements aktiviert wird, wenn ein stangenförmiges Gemüse, beispielsweise der Kopf einer Spargelstange, in einem Bereich des Greiferelements positioniert ist, beispielsweise in der horizontalen Mitte des Greiferelements. Bei dem Haltezustand kann beispielsweise ein Fluidstrom, etwa Druckluft, in ein Greiferkissen eingeleitet werden, das sein Volumen vergrößert und dadurch einen Druck zum Halten des stangenförmigen Gemüses ausübt. Das stangenförmige Gemüse kann dadurch insbesondere in einer vertikalen, zentralen Lage in dem Greiferelement festgehalten werden.

Weiterhin kann die Steuereinheit dazu ausgebildet sein, dass bei der gleichzeitigen Schälung von zwei unterschiedlich langen Gemüsestangen das klemmende Halten in den Greiferelementen nacheinander erfolgt. Wenn in einem ersten Schritt der Kopf der kürzeren Gemüsestange erkannt wird, kann das Absenken zeitweise gestoppt und das zugehörige Greiferelement geschlossen werden. Anschließend können beide oder nur ein Stützelement der längeren Gemüsestange weiter abgesenkt werden, bis eine definierte Endposition erreicht ist und das Greiferelement in analoger Weise geschlossen wird.

Die Greifereinheit für eine Schälvorrichtung zum Schälen von stangenförmigem Gemüse mit einer Längsachse, insbesondere zum Schälen von grünem und/oder weißem Spargel, weist zumindest ein Greiferelement zum Halten des Gemüses auf. Dabei ist das Greiferelement um zwei Achsen beweglich gelagert.

Die Greifereinheit ist insbesondere dazu eingerichtet, in der vorliegend beschriebenen Schälvorrichtung verwendet zu werden. Sie weist daher die gleichen Vorteile auf und kann entsprechend weitergebildet werden.

Auch wenn vorliegend durchgängig von "Gemüse" gesprochen wird, soll dies grundsätzlich nicht einschränkend zu verstehen sein und damit jegliche stangenförmige Gemüsesorte gemein sein, die mittels einer solchen Schälmaschine geschält werden können. Insbesondere können "Gemüse", "Stangengemüse" und/oder "stangenförmiges Gemüse" grüner und/oder weißer Spargel (Asparagus) sein.

Das Greifelement kann innerhalb eines bestimmten Winkelbereichs, beispielsweise 10°, schwenkbar gelagert sein. Die Auslenkbarkeit kann beispielsweise +/-10° betragen oder größer sein, etwa +/-15°.

Bei einer solchen Lagerung ist das Greifelement um zwei Achsen schwenkbar. Eine solche Lagerung wird insbesondere durch eine Aufhängung an zwei Achsen erhalten, die insbesondere senkrecht zueinander angeordnet sind.

Bei anderen Ausbildungen kann eine Lagerung auf einem Luftkissen ausgeführt werden oder es könnte eine Kugellagerung vorgesehen sein.

Die Gemüsestange kann sich dabei selbständig in die Vertikale ausrichten, insbesondere durch ihr Eigengewicht. Beim Schälvorgang können dann Schälmesser an die Stange angedrückt werden und die Lagerung der Greifereinheit erlaubt es der gehaltenen Stange, dem Druck zu folgen statt eine Spannung aufzubauen und eventuell zu brechen.

Denkbar ist bei einer weiteren Ausbildung, dass die Form der Stange entlang einer Längsachse bestimmt und eine Ausrichtung des Greiferelements so eingestellt wird, dass die Stange optimal in eine bestimmte Richtung ausgerichtet ist, beispielsweise nach unten, sodass ein möglichst spannungsfreies Schälen möglich ist. Auch hierzu kann eine kardanische Lagerung des Greiferelements genutzt werden.

Bei der Schälvorrichtung kann vorgesehen sein, dass das Greiferelement zwischen den Schritten des Schälvorgangs beziehungsweise zwischen den Schälschnitten rotiert, sodass eine Stange mit einer anpassbaren Anzahl von Schälschnitten geschält werden kann. Andererseits kann auch vorgesehen sein, dass die Gemüsestangen für jeden Schritt des Schälvorgangs von einem Schälmesser beziehungsweise einem Paar von Schälmessern zum nächsten transportiert werden.

Weitere Einzelheiten und Vorteile der Erfindung sollen nun anhand der Zeichnungen näher erläutert werden.

Es zeigen:
- Fig. 1: eine perspektivische Darstellung der Schälvorrichtung mit den zentralen Komponenten und Bauteilen;
- Fig. 2: eine perspektivische Darstellung eines Teils der Antriebseinheit;
- Fig. 3: eine perspektivische Schnittdarstellung des Greiferelementes;
- Fig. 4A bis 4D: ein Ausführungsbeispiel des Greiferelementes gemäß der vorliegenden Beschreibung;
- Fig. 5: eine Draufsicht auf den geöffneten Transmissionsraum und die Antriebseinheit;
- Fig. 6: eine perspektivische Darstellung des oberen Teils der Schälvorrichtung;
- Fig. 7: eine perspektivische Darstellung der geöffneten Schälmaschine; und
- Fig. 8: eine perspektivische Darstellung der gelösten Schäleinheit von der Antriebseinheit.

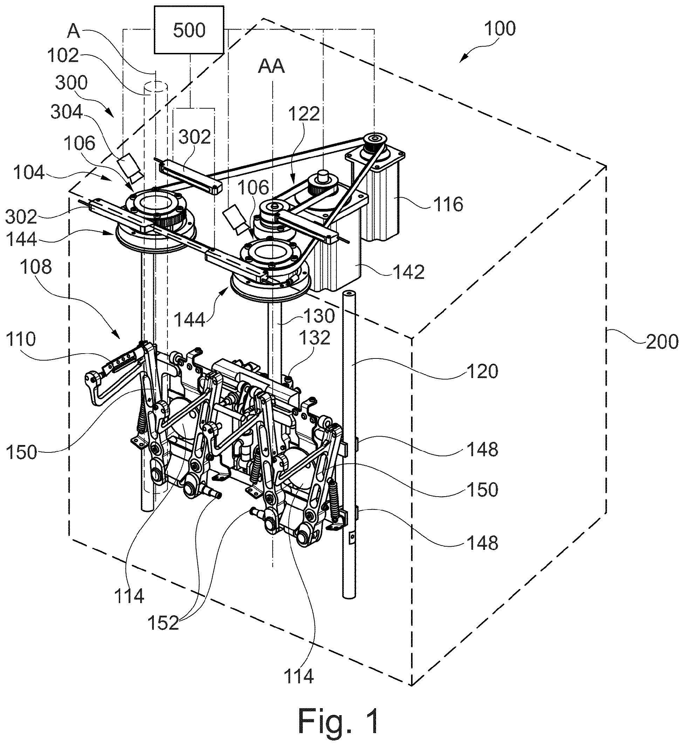

Mit Bezug zu Fig. 1 wird eine perspektivische Darstellung der Schälvorrichtung zum Schälen von stangenförmigem Gemüse erläutert.

Die Schälvorrichtung weist ein Gehäuse 200 aus, das als gestrichelter Körper angedeutet ist.

Die Schälvorrichtung 100 umfasst eine Greifereinheit 104 mit zwei Greiferelementen 106, einer Schäleinheit 108 mit zwei schwenkbar gelagerten Messerpaaren 110 und einer Steuereinheit 500.

Die beiden Greiferelemente 106 sind jeweils in einer Lagereinheit 144 gelagert, die unten näher erläutert wird.

Bei dem Ausführungsbeispiel können die Greiferelemente 106 um eine Behandlungsachse AA beziehungsweise um eine Längsachse A eines gehaltenen stangeförmigen Gemüses 102 rotiert werden. Hierzu ist ein motorischer Antrieb vorgesehen, insbesondere ein Motor 116, der als Schrittmotor (Stepper) oder als Servomotor ausgebildet sein kann, und der über einen Riemen als Übertragungselement 118 beide Greiferelemente 106 gemeinsam antreibt.

In weiteren Ausführungsbeispielen sind die Greiferelemente nicht um die Behandlungsachse AA rotierbar. Das heißt insbesondere, das gehaltene stangeförmige Gemüse 102 kann nicht um seine Längsachse A rotiert werden.

Ferner ist bei dem Beispiel eine Sensoreinheit 300 vorgesehen, die benachbart zu jeder der beiden Behandlungsachsen AA einen Geometriesensor 302 und einen Farbsensor 304 umfasst. Als Geometriesensor 302 ist in dem Bespiel eine Zeilenkamera vorgesehen, die einer Erfassungseinheit gegenübersteht und durch deren Strahlengang hindurch das stangeförmige Gemüse 102 geführt wird; mittels der Kamera wird dann der Durchmesser der Stange erfasst. Der Farbsensor 304 ist vorliegend als optischer Farb- und Kontrastsensor ausgebildet, der dazu eingerichtet ist, die Farbe und/oder den Kontrast des Gemüses zu erfassen und allein oder mittels der Steuereinheit 500 einen Farbwert und damit die Unterscheidung zwischen beispielsweise einem weißen und einem grünen Spargel 102 bestimmen kann.

Der als Liniensensor ausgebildete Geometriesensor 302 und der Farbsensor 304 sind in Zuführungsrichtung des Gemüses 102 entlang der Behandlungsachse AA oberhalb, also vor den Greifen 106 angeordnet.

Bei weiteren Ausführungsbeispielen sind keine solchen Sensoren vorhanden.

Die Schäleinheit 108 ist über seitliche Gleitkörper 148 mit zwei Linearführungen 120 verbunden und hieran verschiebbar gelagert. Eine Antriebseinheit 122 umfasst eine in zwei Lagern 128 rotativ gelagerte und vertikal ausgerichtete Antriebsspindel 130, die von einem Motor 142 über ein Übertragungselement 146 in Rotation gebracht wird. Die zugehörige Spindelmutter 132 ist drehfest an der Schäleinheit 180 angeordnet und hebt oder senkt diese drehrichtungsabhängig.

Die Messer 110 sind paarweise an schwenkbar gelagerten Schwenkarmen 150 angeordnet, die in Richtung des Gemüses 102 beziehungsweise der Bearbeitungsachse AA geschwenkt werden können. Die können auf der Oberfläche des Gemüses 102 anliegend positioniert werden. Die Schwenkarme 150 sind über die Anschlüsse 152 hinsichtlich ihrer Schwenkbewegung aktivierbar.

Die Geometriesensoren 302 sind dazu eingerichtet den Durchmesser des Gemüses 102 zu erfassen. Die Steuerung 500 bestimmt dann eine vorteilhafte Anzahl von parallelen Schälschnitten 260 zum Schälen des stangeförmigen Gemüses 102. Ferner wird bestimmt, mit welchem Drehwinkel die Greiferelemente 106 zwischen den Schälschnitten rotiert werden sollen. Da bei dem Beispiel die Drehbewegung der beiden Gemüsestangen 102 gekoppelt ist und eine vollständige Entfernung der Schale erforderlich ist, werden die Anzahl der Schälschnitte und die zugehörigen Verstellschritte des Drehwinkels auf Basis des Durchmessers der dickeren Gemüsestange bestimmt.

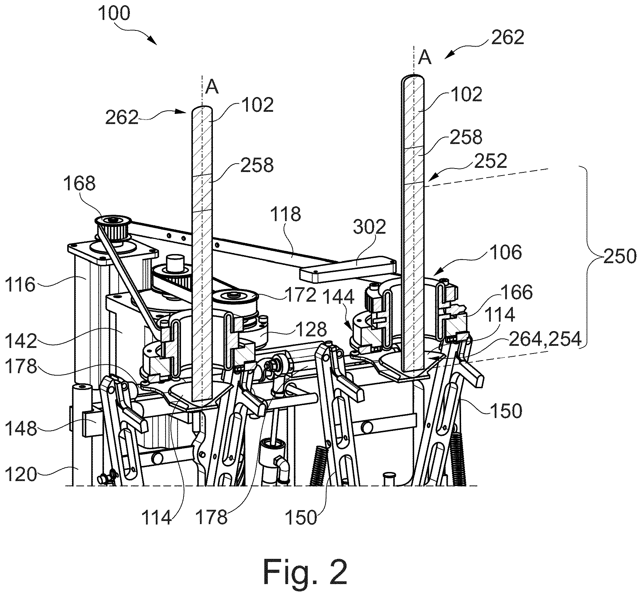

In einem Zuführungsschritt wird eine Gemüsestange 102 von oben in Ausrichtung der eigenen Längsachse A parallel zur Behandlungsachse AA in das jeweilige Greiferelement 106 eingeführt beziehungsweise durch das Greiferelement 106 hindurch geführt. Das Fußende 264 der Gemüsestange weist nach unten und daher zuerst durch das Greiferelement 106 hindurchgeführt. Dabei ist, wie insbesondere in Fig. 2 im Detail dargestellt, ein konus- oder tellerartiges Stützelement 114 herausgeschwenkt. Es steht damit quer zur Behandlungsachse AA. Das Stützelement 114 ist an der Schäleinheit 108 gelagert und mit dieser vertikal verfahrbar. Das Fußende 264 wird in Anlage mit dem Stützelement 114 angebracht und somit in vertikaler Richtung gehalten. Vom Stützelement 114 gehalten, wird das Gemüse 102 vertikal nach unten geführt, bis sich ein für das Gemüse 102 definierte Haltebereich 258 der Gemüsestange 102 auf der Höhe des Greiferelements 106 befindet.

Bei weiteren Ausführungsbeispielen kann eine andere Zuführung der Gemüsestange 102 vorgesehen sein, etwa von unten, von der Seite oder auf andere Weise.

Das Gemüse 102 wird in dem Greiferelement 106 fixiert, indem ein flexibles, ringförmiges Greiferkissen 156 über den jeweiligen Anschluss 152 mit Druckluft beaufschlagt wird.

Fig. 2 zeigt eine Situation, bei der die Stützelemente 114 um eine Schwenkachse 178 um 90° verschwenkt wurden und das Gemüse 102 auf den ausgeschwenkten Stützelementen 114 mit dem jeweiligen Fußende 264 unmittelbar unterhalb der Greiferelemente 106 aufsteht.

Die Greiferkissen 156 sind dabei geöffnet, also nicht mit Druckluft beaufschlagt, so dass das Gemüse 102 frei steht oder anliegt und dabei nicht eingeklemmt beziehungsweise gehalten wird.

Der Abstand zwischen dem Geometriesensor 302 und dem Stützelement 114 ist bekannt und kann, wie vorstehend beschrieben zu dem vertikalen Verfahrweg hinzuaddiert werden, wenn das Stützelement 114 mit dem Gemüse 102 bis zum Verlassen des Kopfendes 262 aus dem Erfassungsbereich des Geometriesensors 302 verfahren wird.

Bei einer nicht dargestellten Ausführungsform ist als Geometriesensor 302 ein Laserscanner vorgesehen, der die überstehende Länge des Gemüses 102 über dem Greiferelement 106 und auch den Durchmesser oder Durchmesserverlauf erfasst. Das Gemüse 102 muss in diesem Fall nicht zur Längenvermessung durch das Stützelement 114 verfahren werden, sondern der Haltebereich 258 im Greiferelement 106 kann unmittelbar angefahren werden.

Die Erfassung des Durchmessers wird vorteilhafterweise mit dem Zuführungsschritt zeitlich überlappend durchgeführt. Der Geometriesensor 302 erfasst beim Eintritt in den Erfassungsbereich der Zeilenkamera das Gemüse 102, ferner ist die Position des Stützelementes 114 bekannt, auf dem das Fußende 264 aufsteht. Das Gemüse 102 wird anschließend so lange vertikal nach unten verfahren, bis das Kopfende 262 des Gemüses 102 den Erfassungsbereich des Geometriesensors 302 verlässt. Auf diese Weise wird die Gemüselänge 102 ermittelt, indem weiterhin die Messewerte des Inkrementalgebers des Motors 142, die Dauer der vertikalen Bewegung und/oder die Geschwindigkeit der vertikalen Absenkung bis zum Austritt aus dem Erfassungsbereich gemeinsam ausgewertet werden. Dabei wird die vertikale Absenkung nur so lange vorgenommen, dass das Kopfende 262 sich noch auf der Höhe des Greiferelementes 262 befindet und von diesem gestützt wird, sodass es nicht seitlich entfallen kann.

Parallel dazu kann mittels des Farbsensors 304 erfasst werden, ob es sich beispielsweise um grünen oder weißen Spargel handelt. Wurde ein grüner Spargel vom Farbsensor erkannt, wird in vertikale Richtung weniger tief gesenkt, wobei diese geringere Absenkung in Abhängigkeit von dem erfassten Durchmesser oder der äußeren Geometrie erfolgen kann, um hinreichend tief aber auch hinreichend weit nach am Kopfende mit dem Schälschritt zu beginnen.

Bei einer alternativen Ausführungsform kann vorgesehen sein, dass das Gemüse wieder durch das Stützelement 114 eine definierte Strecke angehoben wird, in Abhängigkeit von der Gemüseart, etwa grüner oder weißer Spargel, und/oder den vorgenannten, erfassen Geometrien des Gemüses, bis ein definierter, optimaler Haltebereich 258 erreicht ist. Dieser ist bei grünem Spargel weiter entfernt vom Kopfende 262 als bei weißem Spargel.

Die Erfassung des Durchmessers Sensorschritt und/oder weitere Erfassungsschritte können auch zeitlich nach dem Zuführungsschritt erfolgen, wenn die jeweiligen Sensoren diesbezüglich ausgebildet und/oder angeordnet sind.

Bei dem Ausführungsbeispiel umfasst ein Schälschritt, dass sich zunächst die Schäleinheit 108 in der oberen Position befindet, die Messer 110 paarweise mittels der Schwenkarme 150 mit einem definierten Auflagedruck an das Gemüse 102 angelegt werden, die Schäleinheit 108 nach unten verfahren wird, bis die Messer 110 über das Fußende 264 hinaus gefahren sind, zeitgleich oder anschließend die Schwenkarme 150 geöffnet werden, das Greiferelement 106 in die nächste Winkelposition rotiert wird und die Schäleinheit 108 in die obere Position verfahren wird.

Die beiden Schritte des Weiterdrehens des Greiferelementes 106 in die nächste Winkelposition und des Verfahrens der Schäleinheit 108 in die obere Position erfolgen idealerweise parallel.

Hierbei kann die vorgenannte Reihenfolge variiert werden, sofern diese für den beabsichtigten Zweck einer umseitigen, effektiven Schälung vorteilhaft ist. Beispielsweise kann das Weiterdrehen erfolgen, wenn die Schäleinheit sich in der oberen Position befindet und die Messer noch nicht angelegt sind.

Der Schälschritt wird nun wiederholt, bis eine Schälung auf dem gesamten Umfang erfolgt ist.

Weiterhin ist es bei dem gezeigten Beispiel möglich, dass der Anlagedruck der paarweisen Messer 110 über einen gesteuerten Druck beim Schälvorgang geregelt wird. Mit dem Auflagedruck kann nämlich insbesondere die Schältiefe beziehungsweise die Dicke der erzeugten Schalen geregelt werden. Bei einer solchen Regelung kann entlang der Behandlungsachse AA der Auflagedruck der Messer 110 verändert werden, um weichere Abschnitte des Gemüses 102, wie etwa in Kopfnähe, mit weniger Druck zu beaufschlagen als härtere Abschnitte, etwa im unteren Abschnitt des Gemüses 102.

Eine weitere Möglichkeit kann darin bestehen, dass der Auflagedruck in Umfangsrichtung verändert wird. In diesem Fall wird bei insbesondere den ersten Vollschnitten ein erster Auflagedruck angelegt. Bei einem Teilschnitt, bei dem bereits einseitig oder zweiseitig ein (paralleler) geschälter Bereich auf dem Umfang mit dem Messer 110 kontaktiert wird, kann ein geringerer Auflagedruck gewählt werden, etwa um eine Doppelschälung von Teilbereichen oder eine zu große Eindringtiefe zu vermeiden. Ein Vollschnitt meint somit in analoger Weise einen Schnitt, bei dem das Messer keinen oder nur einen sehr geringen bereits geschälten Bereich kontaktiert.

Beim Zuführen von beispielsweise grünen oder weißen Spargelstangen erkennt der Farbsensor 304 die Art des Spargels. Wird eine grüne Spargelstange erkannt, füllt sich das jeweilige Greiferelement 106, während der Spargel mittels der Stützvorrichtung 114 in den Schälraum 202 geführt wird, in Abhängigkeit eines voreingestellten Parameters mit Druckluft. Bei einem grünen Spargel beträgt die Schällänge 250 beispielsweise 10cm, wobei die Endposition 252 durch das Ende des Gemüses 102 am Fußende 264 definiert ist. Ein grüner Spargel wird also in der Regel nicht hinsichtlich der vollständigen Länge in Richtung der Längsachse A erfasst.

Wird beispielsweise eine weiße Spargelstange erkannt, wird das Stützelement 114 so weit in den Schälraum 202 abgesenkt, bis der Kopf des Spargels den Bereich des Geometriesensors 302 verlassen hat, wobei die Gesamtlänge des weißen Spargels erfasst wird. Anschließend stoppt das Stützelement 114 kurz, damit die Gemüsestange 102 genau an der gemessenen Position gehalten werden kann, indem das Greiferelemente 106 mit Pressluft beaufschlagt wird, so dass der Spargel am Kopf beziehungsweis kurz unterhalb des Kopfes gehalten wird. Alternativ kann auch vorgesehen sein, dass der Spargel nicht angehoben wird, sondern das Greiferelement 106 unmittelbar um den Spargelkopf geschlossen wird und diesen damit klemmend hält.

In Abhängigkeit von einem ermittelten Durchmesser der Gemüsestange kann beispielsweise mittels eines nicht dargestellten Proportionaldruckregelventils der Schäldruck des Messers 110 während des Schälschrittes geregelt werden. Ein dünnes, zerbrechliches Gemüse 102, wie beispielsweise eine dünne Spargelstange, wird somit sanfter mit geringerem Schäldruck geschält als eine dickere Spargelstange. Ebenfalls können die weichen Zonen, welche sich beim Spargel unterhalb des Kopfes (Kopfende) befinden, mit einem geringeren Druck geschält werden als die festen Zonen am Fußende. Diese Eigenschaft ermöglicht es, in Verbindung mit der Anzahl der Schnitte, jeden Spargel zu schälen, ohne dabei die Messerstärke zu wechseln.

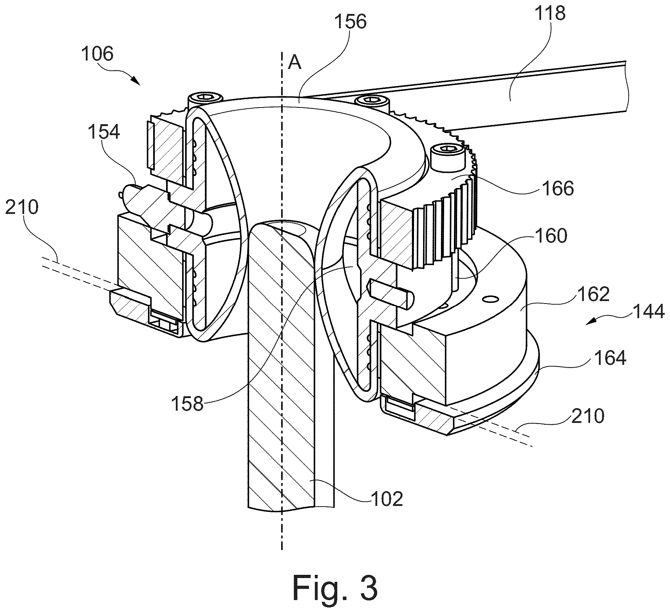

Mit Bezug zu Fig. 3 wird eine perspektivische Schnittdarstellung eines Greiferelementes 106 aus dem Stand der Technik erläutert.

Bei dem gezeigten Fall wurde das stangeförmige Gemüse 102 bis zur Mitte des Greiferkissens 156 verfahren.

Das Greiferkissen 156 ist umlaufend um ein Stützelement 158 angeordnet. Das Stützelement 158 weist einen kranzartigen Überstand 160 auf, in dem auch der Anschluss 154 für einen Pneumatikschlauch (nicht dargestellt) angeordnet ist. Der Überstand 160 ist auf einem Drehlager 162 aufgesetzt, das über ein Kugel- oder Gleitlager in einem korrelierenden Festlager 164 gelagert und geführt ist. Das Festlager 164 ist an einer Trägerplatte 210 angebracht, die als eine gestrichelte Linie skizziert wurde.

Oberhalb des Überstandes 160 und mit diesem drehfest verbunden ist eine Zahnriemenscheibe 166 angeordnet, die über das Übertragungselement 118 um eine vertikale Achse in definierten Winkelschritten rotiert werden kann.

Das Greiferelement 106 ist drehbar gelagert und einseitig mittels eines (Pneumatik-)Anschlusses 154 mit einem nicht dargestellten Pneumatikschlauch verbunden. Die Summe der einzelnen Drehbewegungen oder Drehschritte (Takte) beträgt idealerweise 180°. Um ein Abreißen des Pneumatikschlauches zu verhindern, wechseln die Drehrichtung nach jeder vollständigen Schälung einer Gemüsestange.

Durch den Antrieb über ein riemenartigen Übertragungselement 118 wird das Greiferelement 106 bei jedem Schnitt beispielsweise um 30° getaktet weitergestellt, sodass über eine Drehung von 180° hinweg sechs Doppelschnitte erfolgen und das Gemüse insgesamt um 360° herum von zwölf Seiten her geschält wird. Bei dickeren Gemüsestangen, wie etwa dickem Spargel, wird beispielsweise 8 Mal um 22,5° gedreht, sodass 16 Schälschnitte ausgeführt werden. Bei dünnerem Gemüse, wie etwa dünnem Spargel, wird fünf Mal 36° getaktet, sodass 10 Schälschnitte erfolgen.

Fig. 3 illustriert auch den Vorteil der leichten Reinigungsmöglichkeit. Das Greiferkissen 156 kann nach unten abgeschwemmt werden, weil nur glatte Oberflächen mit dem Gemüse 102 in Kontakt kommen und keine Verschlingungsmöglichkeit für faseriges Material oder Schalen geben ist. Weiterhin kommt das Greiferelement 106 nicht direkt in Kontakt mit den abgeschnittenen Schalen, weil diese nach unten fallen und dort entfernt werden können.

Bei dem in Fig. 3 gezeigten Greiferelement 106 wird die Gemüsestange 102 von oben oder von unten in das ringförmige Greiferelement 106 so tief eingeführt, bis der Kopf des Spargels die Mitte des Greiferelements 106 erreicht hat oder bis ein anderer definierter Haltebereich 258 der Gemüsestange 102 die Mitte des Greiferelements 106 erreicht hat. Das Greiferkissen 156 wird dann mit Druckluft aufgeblasen, sodass der Innenraum des Greiferelements 106 sich im Durchmesser verjüngt und die Gemüsestange 102 gehalten wird. Dabei schmiegt sich die Spannmembran des Greiferkissens 156 um den Kopf der Gemüsestange 102, sodass dieser, eingespannt in einem Luftkissen, in seiner Position festgehalten wird.

Die Längsachse A der Gemüsestange 102 wird beim Halten in dem Greiferelement 106 weitgehendst in der Behandlungsachse AA des Greiferelements 106 ausgerichtet. Im Idealfall liegen dann beide Achsen A, AA übereinander.

Ein gekrümmter Spargelschaft, der unterhalb des gehaltenen Bereichs 258 von einer geraden Ideallinie von der Längsachse A abweicht, wird beim Schließen des Greiferelements schief in den Raum gedrückt. Das heißt, die Längsachse A des Spargelschafts ist gegenüber der Behandlungsachse AA und damit auch zur Schälbewegung abgewinkelt.

Zu Beginn des Schälvorgangs fahren die Schälstationen nach oben. Ist die Gemüsestange 102 stark gekrümmt, so kann sie bereits vor dem Schälen in Kontakt mit einem Schwenkarm 150 in der Aufwärtsbewegung kommen und brechen. Bei einer geringeren Krümmung kommt es dazu, dass eines der paarweisen Messer 110 zuerst mit der Gemüsestange 102 in Kontakt kommt und diese zur Behandlungsachse AA hin drückt. Dabei entsteht ein Biegemoment, das die Gemüsestange 102 brechen lassen kann.

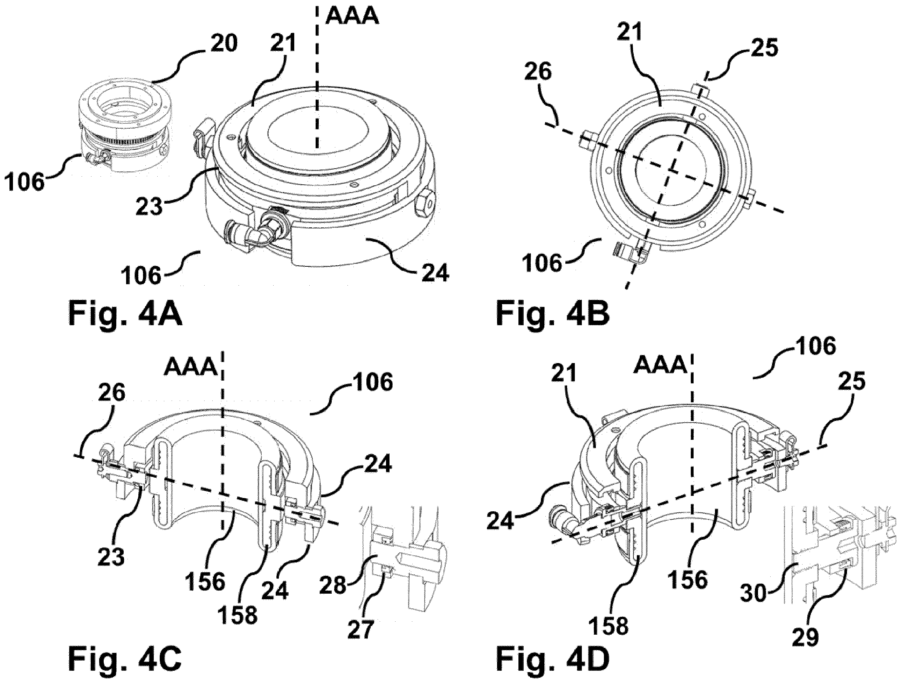

Mit Bezug zu den Fig. 4A bis 4D wird ein Ausführungsbeispiel eines Greiferelements 106 gemäß der vorliegenden Beschreibung erläutert. Es wird von dem oben mit Bezug zu Fig. 3 erläuterten Ausführungsbeispiel eines Greiferelements 106 ausgegangen und die gleich oder ähnlich wirkenden oder ausgebildeten Merkmale und Elemente sind mit den gleichen Bezugszeichen versehen. Nachfolgend wird im Wesentlichen nur auf die Unterschiede zur Ausführungsform der Fig. 3 eingegangen.

Das Greiferelement 106 ist um zwei Achsen 25, 26 schwenkbar gelagert. Genauer gesagt ist es über eine kardanische beziehungsweise gyroskopische Lagerung oder Aufhängung mit der Greifereinheit 104 verbunden. Die Achsen sind bei dem Beispiel senkrecht zueinander ausgerichtet und als X-Achse 25 sowie als Y-Achse 26 definiert. Sie verlaufen zudem senkrecht gegenüber einer durch die Mitte des Greiferelements 106 verlaufenden Zentralachse AAA und ihr Schnittpunkt liegt auf der Zentralachse AAA.

Wegen der schwenkbaren Lagerung des Greiferelements 106 stimmen die Behandlungsachse AA der Schälvorrichtung 100 und die Zentralachse AAA des Greiferelements 106 nicht mehr notwendigerweise überein.

Bei dem Ausführungsbeispiel kann das Greiferelement 106 um etwa +/- 10° um jede der beiden Schwenkachsen X, Y 25, 26 geschwenkt werden. Dadurch kann die Gemüsestange 102 selbständig eine vertikale Ausrichtung einnehmen und ein gekrümmter Wuchs einer Gemüsestange 102 wird weitgehend ausgeglichen, sodass der Parallelschnitt der Schälstationen annähernd zur Vertikalachse beziehungsweise zur Zentralachse AAA erfolgen kann. Insbesondere werden dadurch Spannungen in der Stange 102 beim Schneiden vermieden oder wenigstens verringert.

Das Greiferelement 106 weist, ähnlich wie bei dem Ausführungsbeispiel in Fig. 3 beschrieben, ein Greiferkissen 156 auf, das mittels eines Fluids aufgepumpt werden kann, um den Durchmesser des Greiferelements 106 so zu verringern, dass die Gemüsestange 102 mit einer definierten Kraft festgehalten wird.

Das Greiferkissen 156 ist an einem Stützelement 158 angebracht und auf die oben beschrieben Weise mit Anschlüssen für eine hydraulische oder pneumatische Leitung versehen.

Das Stützelement 158 ist über Rotationsbolzen 30 um die X-Achse schwenkbar gegenüber einem starren Aufnahmering 21 gelagert. Die Lagerung weist dabei ferner eine Rotationsbremse 29 auf, die eine Reibkraft bewirkt und dadurch ein Aufschwingen bei periodischen Anregungen verhindert.

Der starre Aufnahmering 21 ist wiederum über Rotationsbolzen 28 um die X-Achse schwenkbar gegenüber einem starren Außenring 24 gelagert, der zudem als Schutzring 24 fungiert. Auch diese Lagerung weist eine Rotationsbremse 27 auf, die eine Reibkraft bewirkt und dadurch ein Aufschwingen bei periodischen Anregungen verhindert.

Bei einer weiteren, nicht gezeigten Ausführungsform kann ein Rückstellelement für zumindest eine der Schwenkachsen 25, 26 vorgesehen sein, das dafür sorgt, dass das Greifelement 106 insbesondere ohne eine Gemüsestange 102 selbständig in eine Ruhelage zurückkehrt. In der Ruhelage kann vorgesehen sein, dass die Zentralachse AAA des Greiferelements mit der Behandlungsachse AA der Schälvorrichtung übereinstimmt.

Die maximale Auslenkung des Greiferelements 106 um die X-Achse 25 beziehungsweise um die Y-Achse 26 ist durch die Bauform der Lagerung und die Abmessungen der Elemente bedingt. Eine weitere Auslenkbarkeit führt insbesondere zu einer größeren Bauform, sodass hierdurch Grenzen gesetzt werden. Insbesondere kann eine maximale Auslenkbarkeit in beide Richtungen von bis zu 15° vorgesehen sein.

Bei dem Ausführungsbeispiel kann das Greiferelement 106 in alle Richtungen mit einer maximalen Neigung von +/- 10° gyroskopisch pendeln. Nach Einführen der Gemüsestange 102 schließt sich das Greiferelement 106 durch Aufpumpen des Greiferkissens 156 mit einem definierten Druck.

Bei dem in Fig. 4A links gezeigten Fall ist das Greiferelement 106 mit einer Zahnscheibe und einem Drehlager 20 montiert. Dies erlaubt es, das Greiferelement 106 um seine Zentralachse AAA zu rotieren.

Wenn nun der Kopf einer gekrümmten Gemüsestange 102 gehalten wird, dann wird Greiferelement 106 selbständig durch das Gewicht der Gemüsestange 102 so geschwenkt, dass die Längsachse A der Gemüsestange 102 ungefähr mit der Behandlungsachse AA der Schälvorrichtung 100 übereinstimmt. Der zu schälende Teil des Stangengemüses wird daher nicht schräg zur Behandlungsachse AA gehalten. Entlang dieser Behandlungsachse 100 erfolgt dann die Bewegung der Messer zum Schälen der Stange 102.

Die Schwerkraft des Stangengemüses 102 und die vertikale Kraft, welche beim Schälen durch die Messer entsteht, sorgen dafür, dass die Gemüsestange 102 immer lotrecht nach unten hängt oder nach unten gezogen wird.

Wenn das Greiferelement 106 für den folgenden Schnitt weitergedreht wird, wie oben bereits beschrieben wurde, dann kann sich die Längsachse der Gemüsestange 102 immer wieder in die vertikale Position zurückstellen. Zusätzlich zur Gewichtskraft der Gemüsestange 102 tragen die Schälmesser durch ihren Anpressdruck zusätzlich dazu bei, die Gemüsestange 102 entlang der Behandlungsachse AA auszurichten.

Durch dieses Vorgehen werden Biegemomente, die beim festen Einspannen einer gekrümmtem Gemüsestange 102 entstehen können, durch die ausweichende Schwenkung ausgeglichen. Zum Beispiel wird brüchiger oder bereits beschädigter Spargel nur noch auf Zug belastet, sodass es zu deutlich reduziertem Spargelbruch kommt, wie er beim Schälen üblicherweise entsteht.

Beim Schälen kann es passieren, dass aufgrund einer Krümmung der Gemüsestange 102 oder durch unterschiedliche Kontaktzeiten der paarweisen Messer an der Gemüsestange 102, beispielsweise schlägt das linke Messer früher an als das rechte, die Gemüsestange 102 in eine Pendelbewegung versetzt wird. Um das Pendeln zu unterdrücken, sind die Lagerungen um die X-Achse 25 und die Y-Achse 26 mit Rotationsbremsen 27, 29 versehen.

Die Rotationsbremsen 27, 29 unterdrücken ferner ein Pendeln der Gemüsestange 102, das entsteht, wenn die Messer das Ende einer krummen Stange verlassen. Bei einer nur unten gekrümmten Stange liegt der Schwerpunk außerhalb der Behandlungsachse AA, sodass sich die Stange 102 ohne Bremse 27, 29 regelrecht aufschwingen könnte.

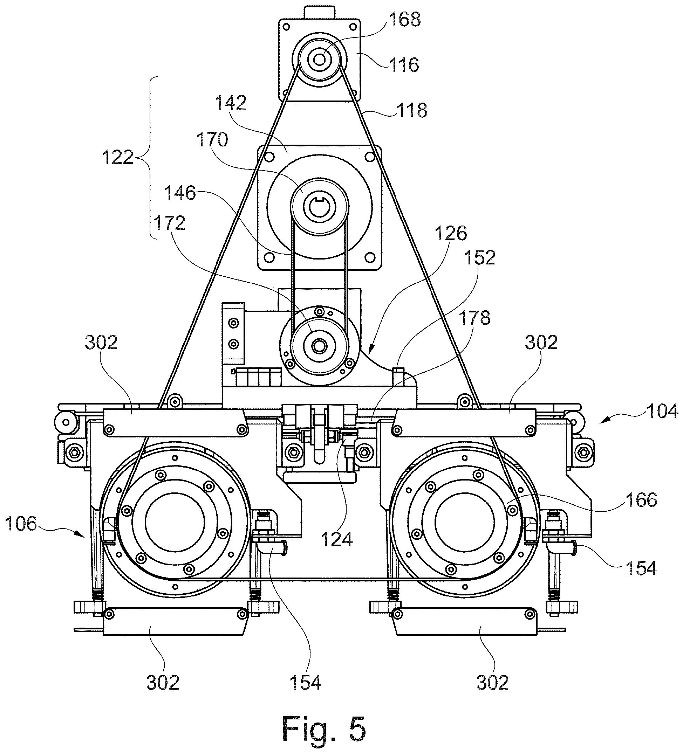

Mit Bezug zu Fig. 5 wird eine Draufsicht auf den geöffneten Transmissionsraum und die Antriebseinheit der Schälvorrichtung 100 erläutert.

Die Greifereinheit 104 mit den beiden Greiferelementen 106 wird über den Motor 116 angetrieben, der über einen Zahnriemenkranz 168 und das Übertragungselement 118 mit den beiden Zahnriemenscheiben 166 kraftleitend verbunden ist und diese antreibt. Der Zahnriemenkranz 168 ist unmittelbar auf der Motorwelle des Motors 116 angeordnet, wobei in einem weiteren Ausführungsbeispiel auch ein Zwischengetriebe vorgesehen sein kann.

Die Schäleinheit 108 (nicht dargestellt) wird über den Motor 142 angetrieben, der über einen Zahnriemenkranz 170 und das Übertragungselement 146 den Zahnriemenkranz 172 der Antriebsspindel 130 rotativ antreibt und damit das Kopplungselement 126 vertikal verfährt, mit dem die gesamte Schäleinheit 108 verbunden ist.

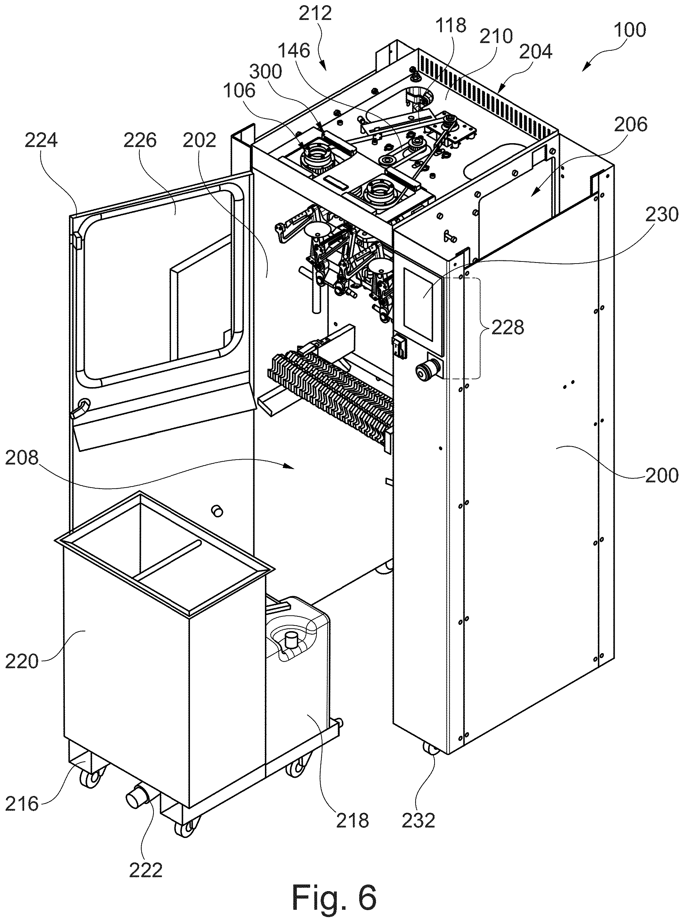

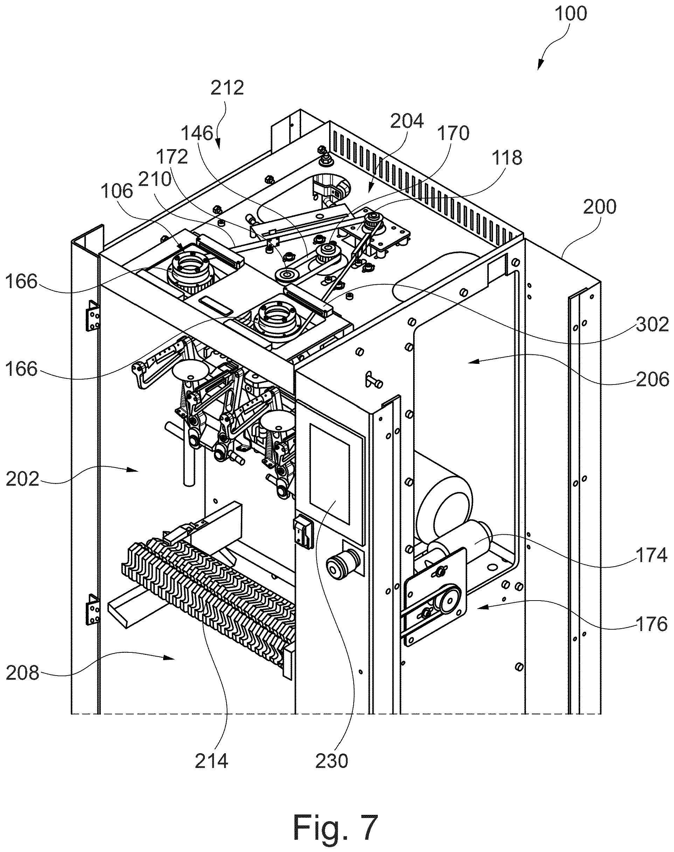

Mit Bezug zu den Fig. 6 und 7 wird eine perspektivische Darstellung des oberen Teils der Schälvorrichtung erläutert. Dabei ist die Schälvorrichtung 100 mit einem geöffneten Gehäuse 200 dargestellt.

Die Schälvorrichtung 100 umfasst eine Zuführungsseite 212, einen Schälraum 202, in dem insbesondere die Schäleinheit 108 angeordnet ist, einen Antriebsraum 206 und einen Wartungsraum 208.

An der Vorderseite des Gehäuses 200 ist eine Gehäusetür 224 angeordnet, die eine Sichtfenster 226 aufweist, worüber der Schälraum 202 und der Wartungsraum 208 mindestens teilweise einsehbar und vollständig zugänglich sind.

Das Gehäuse 200 weist auf seiner Unterseite Rollen 232 auf, sodass die Schälvorrichtung 100 insgesamt verschiebbar ist.

Auf der Vorderseite des Gehäuses 200 ist weiterhin eine Bedieneinheit 228 mit einem Monitor 230 angeordnet.

In bekannter Weise können weitere Kontroll-, Sicherheits- und Funktionselemente vorgesehen werden, um insbesondere Servicemitarbeitern erweiterte Eingriffsberechtigungen für die vorrangig vollautomatisch arbeitende Schälvorrichtung einzuräumen.

Die Greiferelemente 106 bilden die Öffnung und den Zugang zu dem Schälraum 202, das eine Gemüsestange 102 durch eines der Greiferelemente 106 hindurch in den Schälraum 202 und zu der dortigen Schäleinheit 108 eingeführt werden muss.

Unterhalb der Schäleinheit 108 im Schälraum 202, im Wartungsraum 208 oder auf dem Übergang der beiden Räume ist eine motorisch angetriebene Zerkleinerungseinheit 214 angeordnet, die herabfallenden Schalen des Gemüses 102 schreddert.

Der Wartungsraum 208 kann einen Rollwagen 216 aufnehmen, auf dem mindestens ein Tank 218 für beispielsweise Frischwasser angeordnet ist und ein Auffangbehälter 220. Weiterhin weist der Rollwagen 216 einen Schlauchanschluss 222 auf, über den der Tank 220 entleerbar ist.

In dem gezeigten Ausführungsbeispiel sind, wie auch in der Fig. 7 im Detail gezeigt, alle Motoren 116, 142 außerhalb des Schälraumes 202 und des Wartungsraumes 208 angeordnet. Weiterhin sind alle Motoren 116, 142 und Übertragungselemente 118, 146 seitlich oder oberhalb vom Schälraum 202, so dass es vollständig oder weitgehend vermieden werden kann, dass Feuchtigkeit oder Schutz eindringen.

Oberhalb des Schälraumes 202 und des Antriebsraumes 206 ist ein Transmissionsraum 204 angeordnet, wobei eine Trägerplatte 210 den Transmissionsraum 204 von dem darunter liegenden Räumen trennt. In den Fig. 6 und 7 ist der Transmissionsraum 204 ohne obere Abdeckung gezeigt, die im bestimmungsgemäßen Betrieb regelmäßig angebracht wird. In dem Transmissionsraum 204 sind die kraftübertragenden Bauteile für die Greifereinheit 104 und die Schäleinheit 108 angeordnet. Dies sind die Zahnriemenkränze 168, 170, 172 und die beiden Zahnriemenscheiben 166 und die als Zahnriemen ausgebildeten Übertragungselemente 118, 146.

Die nicht gezeigte Abdeckung weist Öffnungen oberhalb der Greiferelemente 106 beziehungsweise der Greifkissen 156 auf, wobei die Geometriesensoren 302 hierbei überdeckt und geschützt werden.

Weiterhin können geeignete konische oder trichterartige Einführhilfen für die Zuführung von Gemüse 102 vorgesehen sein. Diese können beispielsweise ein Stück in Richtung des Greiferelementes 106 beziehungsweise der Greifkissen 156 ragen.

In dem gezeigten Bespiel sind die Geometriesensoren 302 farbsensitiv, also kombinierte Farb- und Geometriesensoren 302, 304, sodass kein weiterer Farbsensor vorgesehen ist.

Die rotierenden Walzen der Zerkleinerungseinheit 214 werden über einen Motor 174 angetrieben, der ebenfalls im dem Antriebsraum 206 untergebracht ist, und dessen Drehbewegung über eine seitliche Transmissionseinheit 176 übertragen wird.

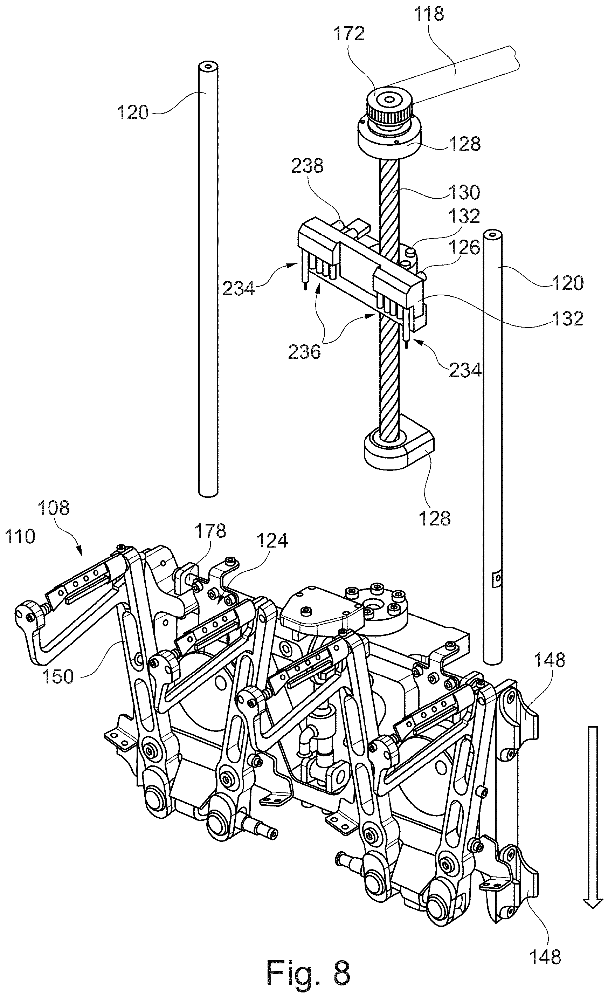

Mit Bezug zu Fig. 8 wird eine perspektivische Darstellung der gelösten Schäleinheit von der Antriebseinheit erläutert. Hierzu ist eine Ausbausituation der Schäleinheit 108 gezeigt.

Ohne tragendes Rahmen- oder Halteelemente ist die Antriebsspindel 130 dargestellt, die an zwei Lagern 128 rotierbar gelagert ist. Am oberen Ende der Antriebsspindel 130 ist ein Zahnriemenkranz 172 angeordnet, der in der vorstehend beschriebenen Weise mit dem Übertragungselement 118 kraftleitend verbunden ist. An der Antriebsspindel 130 ist über die Spindelmutter 132 das Koppelelement 126 angeordnet und vertikal antreibbar.

In der gezeigten Ausbausituation ist die Schäleinheit 108 durch das Ziehen des Rastbolzens 124 und ein Verschieben nach unten von dem Koppelelement 126 und den dortigen vertikalen nach unten weisenden Führungsbolzen 234 und dem Steckverbinder 236 gelöst. Die Rastbolzen 124 sind dabei horizontal beziehungsweise quer zur Spindelmutter 132 ausgerichtet. Beim Zusammenbau von Schäleinheit 108 und Kopplungselement 126 dienen die seitlich von dem Steckverbinder 236 angeordneten und vertikal bzw. quer zu den Rastbolzen 124 ausgerichteten Führungsbolzen 234 als Einführungshilfe.

Weiterhin ist die Schäleinheit 108 an den Linearführungen 120 nach unten herausgeführt, sodass die seitlichen Gleitelemente 148 aus Kontakt mit den beiden Linearführungen 120 gekommen sind.

In dem Ausführungsbeispiel kann weiterhin vorgesehen sein, dass die nicht abgebildeten, fluidischen Versorgungstanks für Wasser und Druckluft ebenfalls durch das Lösen des Koppelelements 126 mittels der in die jeweiligen Bauteile eingelassenen Rastbolzen 124 getrennt werden. Hierbei kann für Wasser und Druckluft auch nur ein einzelner Versorgungstank vorgesehen sein.

In der dargestellten Ausbausituation ist zu erkennen, dass der Steckverbinder 236 in Form einer Schnellkupplung ausgebildet ist, der eine schnelle, werkzeuglose Verbindung und Entfernung der erforderlichen Schlauchanschlüsse bzw. Medienanschlüsse, wie Wasser- und/oder Pneumatik, ermöglicht. Auf diese Weise wird eine sehr kompakte und manuell einfach zu bedienende Baueinheit erreicht. Auf der Rückseite der Schäleinheit 108 ist der komplementäre Gegensteckverbinder angeordnet (nicht dargestellt). An dem Kopplungselement 126 sind weiterhin Schlauchanschlüsse 238 vorgesehen, über die der Steckverbinder 236 von außen mit Medien versorgt wird. In der gezeigten Ausführungsform weist der Steckverbinder 236 zwei Gruppen von je vier Medienanschlüssen auf.

Bei einer nicht gezeigten Ausführungsform sind die Steckverbinder als separate Schlauch- oder Schnellkupplungen ausgebildet, die nicht in das Kopplungselement 126 integriert sind.

Die Schäleinheit 108 kann somit sehr einfach aus dem Schälraum 202 entnommen werden und bedarfsweise gereinigt werden, beispielsweise als gesamte Schäleinheit 108 in einer handelsüblichen Spülmaschine gereinigt werden. Durch diese einfach, schnell und insbesondere vollständige Entnahmemöglichkeit des Schälwerkes, ist der Schälraum 202 vollständig zugänglich und kann leicht gereinigt werden.

Weiterhin kann der Schälraum 202 gefahrlos gereinigt werden, weil die sehr scharfen Messer 110 mit der Schäleinheit 108 gemeinsam entfernt wurden und dies ohne gesonderte (De-)Montage derselben.

Da die Schäleinheit 108 die Baueinheit mit dem größten Verschleiß und Verschmutzung darstellt, erleichtert die schnelle und vollständige Entnahme weiterhin die Wartung und Reparatur. Beispielsweise kann ein Servicetechniker bei einem Betreiber eine defekte und/oder stumpfe Schäleinheit 108 vollständig entnehmen und gegen ein neue, gewartete und/oder getestete Schäleinheit 108 austauschen und somit Unterbrechungszeiten minimieren.

In den vorstehenden Ausführungen werde "Gemüse", "Gemüsestange" und "Stangengemüse" synonym verwendet. Weiterhin ist das Messer 110 aus Gründen der Übersichtlichkeit in einigen Fig. nicht oder nur in einer von mehreren Positionen dargestellt, wobei die Vorrichtung natürlich im bestimmungsgemäßen Betrieb immer mit allen Messern ausgestattet ist.

Weiterhin sind viele erforderliche und/oder vorteilhafte Elemente und Details nicht beschreiben oder gezeigt, wie beispielsweise Versorgungsleitungen (Medien, Strom oder Daten), Aufhängungen, Befestigungsmittel und vielen mehr, die bedarfsweise vorzusehen sind.

### Bezugszeichenliste

- 20: Zahnscheibe und Drehlager
- 21: Starrer Aufnahmering
- 23: Schwenkbarer Innenring (um Y-Achse)
- 24: Starrer Außenring, Schutzring
- 25: X-Achse
- 26: Y-Achse
- 27: Rotationsbremse (Y-Achse)
- 28: Rotationsbolzen (Y-Achse)
- 29: Rotationsbremse (X-Achse)
- 30: Rotationsbolzen (X-Achse)
- 100: Schälvorrichtung
- 102: Gemüse
- 104: Greifereinheit
- 106: Greiferelement
- 108: Schäleinheit
- 110: Messer
- 114: Stützelement
- 116: motorischer Antrieb, Motor (für Greiferelement 106)
- 118: Übertragungselement
- 120: Linearführung
- 122: Antriebseinheit
- 124: Rastbolzen
- 126: Kopplungselement
- 128: Lager
- 130: Antriebsspindel
- 132: Spindelmutter
- 142: Motor
- 144: Lagereinheit
- 146: Übertragungselement
- 148: Gleitkörper
- 150: Schwenkarm
- 152: Anschluss
- 154: Anschluss
- 156: Greiferkissen
- 158: Stützelement
- 160: Überstand
- 162: Drehlager
- 164: Festlager
- 166: Zahnriemenscheibe
- 168: Zahnriemenkranz
- 170: Zahnriemenkranz
- 172: Zahnriemenkranz
- 174: Motor
- 176: Transmissionseinheit
- 178: Schwenkachse
- 200: Gehäuse
- 202: Schälraum
- 204: Transmissionsraum
- 206: Antriebsraum
- 208: Wartungsraum
- 210: Trennelement
- 212: Zuführungsseite
- 214: Zerkleinerungseinheit
- 216: Rollwagen
- 218: Tank
- 220: Auffangbehälter
- 222: Schlauchanschluss
- 224: Gehäusetür
- 226: Sichtfenster
- 228: Bedienereinheit
- 230: Monitor
- 232: Rollen
- 234: Zapfen
- 236: Steckverbinder
- 238: Schlauchanschluss
- 250: Schällänge
- 252: Anfangsposition
- 254: Endposition
- 256: Teillänge der Schällänge
- 258: Haltebereich
- 260: Schälschnitt/e
- 262: Kopfende
- 264: Fußende
- 300: Sensoreinheit
- 302: Geometriesensor
- 304: Farbsensor
- 500: Steuereinheit
- A: Längsachse
- AA: Behandlungsachse
- AAA: Zentralachse

## Patentansprüche

1. Schälvorrichtung (100) zum Schälen von stangenförmigem Gemüse (102) mit einer Längsachse (A), insbesondere zum Schälen von grünem und/oder weißem Spargel, mit
- zumindest einem Greiferelement (106) zum Halten des Gemüses (102);
- einer Schäleinheit (108); und
- einer Steuereinheit (500) zum Steuern der Schälvorrichtung (100); wobei
- das Greiferelement (106) um zwei Achsen beweglich so gelagert ist, dass sich die Längsachse (A) eines gehaltenen stangenförmigen Gemüses (102) durch dessen Eigengewicht selbständig ausrichtet.

2. Schälvorrichtung (100) gemäß Anspruch 1,
**dadurch gekennzeichnet, dass**
das Greiferelement (106) über eine kardanische Lagerung mit einer Greifereinheit (104) der Schälvorrichtung (100) verbunden ist.

3. Schälvorrichtung (100) gemäß einem der vorhergehenden Ansprüche,
**dadurch gekennzeichnet, dass**
die zwei Achsen, um welche das Greiferelement (106) beweglich gelagert ist, senkrecht zueinander angeordnet sind.

4. Schälvorrichtung (100) gemäß einem der vorhergehenden Ansprüche,
**dadurch gekennzeichnet, dass**
das Greiferelement (106) um die zwei Achsen um 5° bis 20° beweglich gelagert ist, bevorzugt um 8° bis 17°, weiter bevorzugt um 10° bis 15°.

5. Schälvorrichtung (100) gemäß einem der vorhergehenden Ansprüche,
**dadurch gekennzeichnet, dass**
bei der um zwei Achsen beweglichen Lagerung zumindest ein Dämpfelement vorgesehen ist, das einer Bewegung des stangenförmigen Gemüses (102) um zumindest eine Achse entgegenwirkt, insbesondere durch Reibung.

6. Schälvorrichtung (100) gemäß einem der vorhergehenden Ansprüche, **dadurch gekennzeichnet, dass**
das Greiferelement (106) ferner um eine dritte Achse (AA), insbesondere senkrecht zu den genannten zwei Achsen der Lagerung des Greiferelements (106), rotierbar ist, insbesondere durch einen motorischen Antrieb (116) rotierbar; wobei
insbesondere der motorische Antrieb (116) dazu eingerichtet ist, die Rotation des Greiferelements (106) um die dritte Achse (AA) über mindestens ein Übertragungselement (118) und/oder eine Getriebeeinheit rotativ anzutreiben, insbesondere schritt- oder winkelabhängig anzutreiben.

7. Schälvorrichtung (100) gemäß einem der vorhergehenden Ansprüche, **gekennzeichnet durch**
eine Sensoreinheit (300) zum Erfassen zumindest eines Messwertes; wobei
die Steuereinheit (500) dazu eingerichtet ist, auf Basis des Messwertes zumindest einen Schälparameter anzupassen; wobei
die Sensoreinheit (300) einen Geometriesensor (302) und/oder einen Farbsensor (304) umfasst.

8. Schälvorrichtung (100) gemäß Anspruch 7,
**dadurch gekennzeichnet, dass**
der angepasste Schälparameter zumindest einer der folgenden Parameter betrifft:
- Anzahl der Schälschnitte (260) in Umfangsrichtung, insbesondere der parallelen beziehungsweise einander gegenüberliegenden Schälschnitte;
- Schällänge (250) mindestens eines Schälschnittes entlang der dritten Achse (AA) und/oder der Längsachse (A) des stangenförmigen Gemüses (102);
- Anfangsposition (252) und/oder Endposition (254) mindestens eines Schälschnittes;
- Anpresskraft eines schwenkbar gelagerten Messers (110) auf mindestens einer Teillänge (256) der Schällänge;
- Haltebereich (258) des Greiferelements (106) entlang der Längsachse (A) des Gemüses (102) beim Halten des stangenförmigen Gemüses (102); und/oder
- Haltekraft des Greiferelements (106) zumindest für eine Teildauer des Haltens des stangenförmigen Gemüses (102).

9. Schälvorrichtung (100) gemäß einem der vorhergehenden Ansprüche, **dadurch gekennzeichnet, dass**
das zumindest eine Greiferelement (106) als fluidisch öffnender und schließender Greifer ausgebildet ist, der insbesondere eine Ring- oder Kranzform aufweist, wobei das stangenförmige Gemüse (102) zum Ein- oder Ausführen in Richtung der Längsachse (A) durch das Greiferelement (106) hindurchgeführt werden kann, insbesondere vollständig hindurchgeführt werden kann.

10. Greifereinheit (106) für eine Schälvorrichtung (100) zum Schälen von stangenförmigem Gemüse (102) mit einer Längsachse (A), insbesondere zum Schälen von grünem und/oder weißem Spargel, mit
zumindest einem Greiferelement (106) zum Halten des Gemüses (102); wobei
das Greiferelement (106) um zwei Achsen beweglich gelagert ist.
